(19) Europäisches Patentamt
European Patent Office
Office européen des brevets

(11) Publication number: 0 194 268 B1

(12) EUROPEAN PATENT SPECIFICATION

(45) Date of publication of patent specification: 23.08.89

(51) Int. Cl.[4]: G 01 C 11/02

(21) Application number: 85903914.1

(22) Date of filing: 19.07.85

(86) International application number: PCT/US85/01377

(87) International publication number: WO 86/01592 13.03.86 Gazette 86/06

# (54) SYSTEM AND METHOD FOR MAPPING GEOSYNCHRONOUS REAL IMAGE DATA INTO IDEALIZED IMAGES.

(30) Priority: 24.08.84 US 644478

(43) Date of publication of application: 17.09.86 Bulletin 86/38

(45) Publication of the grant of the patent: 23.08.89 Bulletin 89/34

(84) Designated Contracting States: DE FR GB

(56) References cited:
Information Processing 74, 5-10 October 1974, Amsterdam (NL), R. Bernstein: "Digital processing of earth observation imagery", pp. 733-737

(73) Proprietor: Hughes Aircraft Company
7200 Hughes Terrace P.O. Box 45066
Los Angeles, California 90045-0066 (US)

(72) Inventor: MacPHERSON, Duncan
617 Sierra Street
El Segundo, CA 90245 (US)

(74) Representative: Kuhnen, Wacker & Partner
Schneggstrasse 3-5 Postfach 1553
D-8050 Freising (DE)

EP 0 194 268 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background

The present invention relates to a satellite imaging system and method providing for accurate absolute location of idealized images and, therefore, precise coregistration of successive images. The invention particularly relates to meteorological satellites.

Meteorological satellites support weather forecasting by providing continuous imaging of the earth from geosynchronous orbit. Each earth image indicates the location of identifiable weather features, e.g., clouds. Weather forecasting involves, in part, extrapolating weather feature movements, determined by comparing successive images.

The nominal geosynchronous orbit of a satellite is usually only approximate due to deviations in inclination, eccentricity, and/or period. As the relative positions of satellite and earth shift, so does the perspective of the satellite camera or imager. If, for example, the orbit inclination is not 0°, an image taken during a 20 minute period will be compressed or stretched on the North-South (NS) dimension. These perspective shifts introduce image distortion and location errors. As a result, successive images are not generally coregistered, making it difficult to separate the effects of feature movements and perspective changes. With a 0.1° inclination the distortion has an root-mean-square (RMS) value of 95 µRAD if the satellite attitude is held fixed inertially. This is considerably in excess of a 14 µRAD limit due to all effects specified for future weather satellites by the National Weather Service (NWS).

These image distortions and errors in location of part or all of the image compromise the utility of the images by introducing errors in locating natural or artificial reference lines (grids) on the images, and by introducing errors in coregistration of successive images, making it difficult to separate the effects of weather feature movements from perspective changes.

The present approach to coregistration as for example disclosed in Information Processing 74, pages 733—737, R. Bernstein: "Digital Processing of Earth Observation Imagery", is to examine a series of images and align them using ground landmarks. This is done after the images are collected, and is vulnerable to cloud obscuration. This approach has been supplemented by extrapolating forward to avoid operational delays at the expense of degraded accuracy. This approach has proved to be cumbersome and results in unacceptably large errors.

A problem with computerized manipulation of completed images is the computational power required. Each image is constituted by on the order of $10^8$ pixels which must be processed by the computer with resulting high demands. Clearly, computational reconstruction is very costly in processing power and storage capacity. Thus, there has heretofore been no practical approach providing for real time coregistration of successive satellite images with the accuracy required by current meteorological applications.

This problem is solved by a system in accordance with claims 1 and 5 and a method in accordance with claim 6.

Summary of the invention

The present invention provides for near real-time construction of idealized images to permit coregistration of successive images. A satellite system includes a satellite nominally in geosynchronous orbit, an imager onboard the satellite, subsystems for determining satellite position and imager attitude, and a computer for producing an idealized image from the perspective of a reference position. The idealized image is constructed on an ongoing basis from real image data together with the position and attitude information.

The present invention is based on the recognition that the variations in satellite position and imager attitude are small enough to allow the use of simple linear interpolations to permit construction of an image from the perspective of a reference position. The reference position can be the nominal geosynchronous position of the satellite generating the real image data.

Generally, the real image data is collected in the form of pixel locations and intensities. The pattern of pixels sampled depends on the detector arrangement and the scanning pattern of the imager. The present invention transforms the real data into an idealized image on a batch basis, so that data collected earlier in an image scan is corrected prior to the completion of the image.

Since the data is processed on a batch basis, the amount of data being managed at any given time is greatly reduced. For example, where a scene is scanned line-by-line, only a small percentage of the total lines constituting the image need be in computer storage for transformation to the ideal coordinates.

The challenge in this processing is to develop a system and procedure simple enough to permit the voluminous image data to be processed at a real time rate and with acceptable computer storage requirements. This is achieved by performing complex calculations only once per line and making appropriate adjustments to the individual pixels.

Accordingly, the present invention provides for the near real-time production of a succession of coregistered ideal images using only a fraction of the computing power and memory required where entire images are to be manipulated. This implementation provides all imaging registration substantially better than required, for example, by the NWS for future weather satellites. Thus, the promptness and accuracy of weather forecasting are significantly enhanced.

Brief description of the drawings

Figure 1 is a schematic perspective view of a satellite imaging system in accordance with the present invention.

Figure 2 depicts the relationship between the collected real image data and the constructed ideal image produced by the system of Figure 1.

Description of the preferred embodiments

A meteorological satellite imaging system 100, illustrated in Figure 1, includes a satellite 101 with an imaging sensor 103 directed at the earth 99, and a ground station 105 for producing idealized images. The illustrated satellite 101 is spin-stabilized, and so includes a despun platform 107 which supports a communication subsystem 109, and a spun rotor 111 which supports the sensor 103 along with its radiative cooler 113 used to cool the sensor's detector array. The sensor 103 includes visible and infrared detectors to provide real image data at multiple frequency bands. The communications subsystem 109 transmits sensor data along a path 115 to the ground station 105.

The ground station 105 includes a computer which transforms the received real image data into an image of the earth 99 as viewed from the satellite's nominal geosynchronous orbit position. Alternatively another reference perspective could be selected.

A portion of a grid 200 for an idealized image is shown in Figure 2, with two segments of rows 260 and 270 of real image pixels superimposed thereon. The format of the idealized image is an array of pixels which are aligned and contiguous in both EW and NS directions.

The illustrated portion includes segments of five contiguous rows 210, 220, 230, 240 and 250; each row segment is shown with six contiguous pixels, e.g., 221, 222, 223, 224, 225 and 226. The full grid 200 is on the order of 11,000 rows of 11,000 pixels each. The rows 260 and 270 of real pixels are shown as staggered and overlapping. Within each row, adjacent real pixels are shown as contiguous. However, the present invention provides for the production of idealized images where adjacent pixels and rows are contiguous, overlapping or underlapping.

In general, the rows of real pixels will be oriented obliquely with respect to the idealized grid, as shown. Typically, the magnitude of the angle between the idealized rows and the real rows is such that a real row would cross no more than four rows of the idealized grid over its 11,000 pixel length. However, the obliqueness is exaggerated in Figure 2 for expository purposes.

To form the desired idealized image, an intensity must be assigned to each of the pixels in the idealized grid. This is done by computing a weighted average of the intensities of the overlapping real pixels.

For example, the intensity to be assigned to the ideal pixel 222 at the second row 220 and second column 280 of the illustrated portion of the idealized grid can be computed from the intensities of the four real pixels 262, 263, 272 and 273 which overlap the ideal pixel. The contribution of the real pixel 262 is its intensity multiplied by the ratio of the area of overlap between that real pixel 262 and the ideal pixel 222 to the area of the ideal pixel 222. The contributions of the other three real pixels 263, 272 and 273 are calculated in a similar fashion. The contributions are summed to obtain the intensity to be assigned the ideal pixel 222.

The challenge is to assign intensities on an ongoing row-by-row basis to minimize delay and computational requirements. For this reason the implemented procedure is mathematically equivalent to the above described process but implements the calculations in a different, more efficient sequence.

The present embodiment processes pixels in batches (of the order of 30,000 batches per image). Within each batch the intensity interpolations are performed first in the EW direction for all pixels, then in the NS direction.

Thus, intensities can be assigned to the idealized grid as real pixel data is received, with only a small delay on the order of a few seconds. The view in the idealized image (except for points near the limb) is substantially that which would be obtained from a satellite at exactly the desired longitude and exactly 0° latitude, with no attitude errors.

Since image intensities in the ideal image are derived from linear interpolations of intensities in the real pixels, the interpolation process introduces no error if scene intensity varies linearly. The interpolation error is always small compared to the effects of errors in knowledge of real pixel location.

In the illustrated embodiment, each line contains eight rows of real pixels. The specific procedure for each line of real pixels follows. The line is read into a seven line wrap-around buffer. As a new line is read in, it replaces the oldest input line currently in memory. Seven input lines suffice to allow correction for all attitude and orbit error contributions to image distortion. The required EW real pixel adjustment due to spacecraft location, spacecraft attitude, and spin phase error is calculated ($\Delta M$ integer pixels+$\delta M$ fractional pixel, both constants). The required NS real pixel adjustment due to spacecraft location, imager mirror position, and encoder position is calculated ($\Delta F$, a constant). The required NS real pixel adjustments due to spacecraft attitude (a Taylor series in EW location) is calculated ($\Delta V$, one point of this vector is calculated for every 8 horizontal pixels in the line).

Two ideal output lines are buffered. One line is calculated while the other is available as data output. For each ideal output line, the following steps are performed: 1) the ideal output pixels are located in real coordinates; 2) the ideal pixel intensities are obtained by interpolating EW and NS between the four appropriate real pixel intensities; and 3) the line of pixels is gridded (if desired). Note that the grid points are always at the same ideal pixel locations and the gridding process is trivial.

The computational process is detailed below for the visible image. Infrared image processing is similar but less computationally demanding (the pixels are larger in size and fewer in number).

Each line of visible image data has 8 pixels NS and (up to) 11000 pixels EW. The largest image has about 1400 lines of data. To ensure that the data is available to generate the ideal image, each border of the ideal image is 24 pixels closer to the image center than the real image.

Herein, pixel variables are defined as follows:

d is the detector number in the line ($1 \leq d \leq 8$);

Q is the ideal line number ($4 \leq Q \leq 1399$);

q is the real line number ($1 \leq q \leq 1402$);

N is the ideal NS pixel location ($N=8(Q-1)+d$);

n is the real NS pixel location ($n=8(q-1)+d$);

M is the ideal EW pixel location ($25 \leq M \leq 10976$);

m is the real EW pixel location ($1 \leq m \leq 11000$);

L is the real NS pixel location adjusted for interpolation;

$P_R$ is real pixel intensity;

$P_E$ is real pixel intensity with EW alignment; and

$P_I$ is ideal pixel intensity.

Initialize calculations for each q as follows. Calculate the EW offset of real pixels relative to ideal pixels due to spacecraft location, spacecraft attitude and spin phase error=$\Delta M$ whole pixels and a pixel fraction $\delta M$. Calculate the NS offset of real pixels relative to ideal pixels due to spacecraft location, imager mirror position and encoder position=$\Delta F$ pixels (not necessarily in integer). Calculate the constants $K_0$, $K_1$, $K_2$ used to represent the offset of the real pixels relative to the ideal pixels due to spacecraft attitude where the representation is $\Delta V(M)=K_0+K_1M+K_2M^2$ pixels.

Calculate the NS pixel locations adjustments $\Delta V(M)=K_0+K_1M+K_2M^2$ every 8th value of M and used for 64 pixels (8EW×8NS).

Ideal output lines are generated as follows. Divide the ideal output line into blocks of 8×498 pixels each (maximum of 22 blocks for largest image). For each ideal block of this type, find a block of real pixels 12×500 such that the area defined by the ideal block is completely contained within the real block.

EW alignment of the real input pixel locations is performed according to the equation:

$$P_{En,M}=\delta M(P_{Rn,m})+(1-\delta M)(P_{Rn,m+1})$$

where $m=(M+\Delta M)$

To compute the NS interpolation coefficient for each idealized pixel (M and N), find n where

$$L_n<N<L_{n+1} \text{ and } L_n=n-(\Delta F+\Delta V)$$

If n/8 is not integer (pixel locations n and n+1 in same line)

$$Z=(N-L_n)$$

If n/8 is an integer (pixel locations n and n+1 in different lines)

$$Z=\frac{(N-L_n)}{(L_{n+1}-L_n)}$$

The value calculated for Z is valid for 8 consecutive horizontal pixels. It is also valid for the 8 adjacent pixels in pixel location N+1, N+2, etc., until the boundary between lines in the real data is encountered.

Finally, calculate the ideal pixel intensity:

$$P_{In,m}=Z(P_{En,M})+(1-Z)(P_{En+1,M})$$

The output consists of 1 line (8×10976) of intensities for idealized pixels.

In the illustrated embodiment, seven registers are used, and each register is filled in 0.8 seconds with one scan line of data. Thus, in any image, the first line of ideal pixels is delayed 5.6 seconds from the generation of the first line of real pixels. Following this a line of ideal pixels is generated for each line of real pixels until the real pixels are complete. One line of ideal pixels is generated in the next 0.8 seconds to complete the ideal image.

In accordance to the foregoing, the present invention provides for the transformation of satellite image data into a scene as viewed from an reference perspective, which can be the satellite nominal position in geosynchronous orbit. By rendering in this idealized perspective, successive images are automatically coregistered so that accurate comparisons, and thus a more reliable forecast, can be made.

The invention is applicable to pointing sensors as well as spinning sensors, and to three-axis stabilized satellites as well as spin-stabilized satellites.

## Claims

1. A satellite imaging system (100) for providing idealized images of a scene, said system comprising:

a satellite (101),

an imager (103) for producing image data (260, 270) in the form of pixel intensities and locations, said imager (103) being located onboard said satellite (101), and

means (105, 109, 107) for providing image attitude and satellite position determinations, characterized by comprising

means (105) for transforming said image data (260, 270) into an idealized image (200) representing said scene from a perspective of a reference position, said transforming means (105) utilizing said attitude and position determinations, and

said satellite (100) being nominally in geosynchronous orbit.

2. The system of claim 1 further comprising a remote station (105), and means (109) for transmitting image data (260, 270) from said satellite (101) to said remote station (105), said remote station (105) including said transforming means.

3. A remote processing station (105), especially for use in a satellite imaging system according to claims 1 or 2, for producing successive images of a scene viewed by an imaging system including a satellite (101), said satellite (101) including an image (103) for producing image data (260, 270) representing said scene, said image data (260, 270) being in the form of pixel intensities and locations, said station including means for providing and/or receiving imager attitude and satellite position determinations, said processing station being characterized by

means for transforming said data (260, 270) into an image (200) representing said scene from the perspective of a reference position, said transforming means utilizing said attitude and position determinations of said satellite being nominally in geosynchronous orbit.

4. The system or station according to anyone of the preceding claims further characterized in that said reference position is the nominal geosynchronous orbit of said satellite (101).

5. The system or station according to anyone of the preceding claims wherein said satellite (101) is a meteorological satellite.

6. A method for producing an idealized image of a scene, said method comprising:

gathering pixel intensity data (260, 270) from a satellite (101) with an imager (103);

determining satellite location and imager attitude;

said method being further characterized by

defining a reference position at a predetermined longitude, latitude and altitude; and

transforming said pixel intensity data (260; 270) into a scene image (200) from the perspective of said reference position using said location and attitude determinations.

7. The method of claim 6 further characterized in that said imager data is in the form of scan lines (260, 270) each scan line including plural pixels (262, 263, 272, 273), each pixel having an associated intensity, each scan liner (260, 270) being at least one pixel high and plural pixels long, said method further comprising the step of:

buffering said data (260, 270) so that multiple scan lines of data are stored at a given time.

**Patentansprüche**

1. Ein Satellitenabbildungssystem (100) zum Bereitstellen von idealisierten Bildern einer Szenerie, wobei das System beinhaltet:

einen Satelliten (101),

einen Abbilder (103) zum Erzeugen von Bilddaten (260, 270) in der Form von Pixelintensitäten und Positionen, wobei der Abbilder (103) an Bord des Satelliten (101) angeordnet ist, und

Vorrichtungen (105, 109, 107) zum Bereitstellen von Bildlage- und Satellitenpositionsbestimmungen, dadurch gekennzeichnet, daß es beinhaltet:

Vorrichtungen (105) zum Transformieren der Bilddaten (260, 270) in ein idealisiertes Bild (200), das die Szenerie aus einer Perspektive einer Referenzposition darstellt, wobei die Transformationsvorrichtungen (105) die Lage- und Positionsbestimmungen verwenden, und

der Satellit (100) sich nominell in einer geostationären Bahn befindet.

2. Das System nach Anspruch 1, daß ferner eine Fernlenkstation (105) und Vorrichtungen (109) zum Übermitteln von Bilddaten (260, 270) von dem Satelliten (101) zu der Bodenstation (105) beinhaltet, wobei die Fernlenkstation (105) die Transformationsvorrichtungen beinhaltet.

3. Eine Fernlenk-Verarbeitungsstation (105), insbesondere zur Verwendung in einem Satellitenabbildungssystem nach Anspruch 1 oder 2, zur Erzeugung von aufeinanderfolgenden Bildern einer Szenerie, die durch ein Abbildungssystem, das einen Satelliten (101) aufweist, beobachtet wird, wobei der Satellit (101) einen Abbilder (103) zum Erzeugen von Bilddaten (260, 270), die die Szenerie darstellen, beinhaltete, wobei die Bilddaten (260, 270) die Form von Pixelintensitäten und -positionen aufweisen, wobei die Station Vorrichtungen zum Bereitstellen und/oder zum Empfangen von Abbilderlage- und Satellitenpositionsbestimmungen beinhaltet, wobei die Verarbeitungsstation gekennzeichnet ist durch

Vorrichtungen zum Transformieren der Daten (260, 270) in ein Bild (200), das die Szenerie aus der Perspektive einer Referenzposition darstellt, wobei die Transformationsvorrichtungen die Lage- und Positionsbestimmungen des Satelliten, der sich nominell in einer geostationären Bahn sich befindet, verwenden.

4. Das System oder die Station nach einem der vorangegangenen Ansprüche, ferner dadurch gekennzeichnet, daß die Referenzposition die nominelle geostationäre Bahn des Satelliten (101) ist.

5. Das System oder die Station nach einem der vorangegangenen Ansprüche, worin der Satellit (101) ein meteorologischer Satellit ist.

6. Ein Verfahren zur Erzeugung eines idealisierten Bildes einer Szenerie, wobei das Verfahren beinhaltet:

Entnehmen von Pixelintensitätsdaten (260, 270) von einem Satelliten (101) mit einem Abbilder (103);

Bestimmen der Satellitenposition und der Abbilderlage;

wobei die Methode ferner gekennzeichnet ist durch

Definieren einer Referenzposition in einer vorherbestimmten Länge, Breite und Höhe; und

Transformation der Pixelintensitätsdaten (260; 270) in ein Szeneriebild (200) aus der Perspektive der Referenzposition, wobei die Standort- und Lagebestimmungen verwendet werden.

7. Verfahren nach Anspruch 6, ferner dadurch gekennzeichnet, daß die Abbilderdaten die Form von Abtastzeilen (260, 270) aufweisen, wobei jede Abtastzeile eine Mehrzahl von Pixeln (262, 263, 272, 273) aufweist, wobei jeder Pixel eine zugeordnete Intensität hat, jede Abtastzeile (260, 270) wenigsten ein Pixel hoch und eine Mehrzahl von Pixeln lang ist, wobei das Verfahren ferner den Schritt beinhaltet:

Puffern der Daten (260, 270), so daß eine Vielzahl von Abtastzeilendaten in einer gegebenen Zeit gespeichert werden.

**Revendications**

1. Système imageur à satellite (100) pour fournir des images idéalisées d'une scène, comprenant:

—un satellite (101);

—un imageur (103) pour produire des données d'images (260, 270) sous la forme d'intensités et d'emplacements d'éléments d'images, cet imageur (103) étant situé à bord du satellite (101);

—des moyens (105, 109, 107) pour fournir des informations sur l'assiette de l'imageur (103) et sur la position du satellite (101), caractérisés en ce qu'ils comprennent:

—des moyens (105) pour convertir les données d'image (260, 270) en une image idéalisée (200) représentant la scène à partir d'une perspective d'une position de référence, ces moyens de conversion (105) utilisant lesdites informations d'assiette et de position; et

—que le satellite (100) est nominalement en orbite géosynchrone.

2. Système imageur selon la revendication 1, caractérisé en ce qu'il comprend en outre une station éloignée (105) et des moyens (109) pour transmettre des données d'images (260, 270) du satellite (101) à la station éloignée (105), cette station éloignée comportant les moyens de conversion (105).

3. Station de traitement éloignée (105), spécialement pour utilisation dans un système imageur à satellite selon la revendication 1 ou 2, pour produire des images successives d'une scène vue par un système imageur comportant un satellite (101), ce satellite comportant un imageur (103) pour produire des données d'images (260, 270) représentant cette scène, ces données d'images étant sous la forme d'intensités et d'emplacements d'éléments d'images, et la station (105) comportant des moyens pour fournir et/ou recevoir des informations d'assiette de l'imageur (103) et de position du satellite (101), cette station étant caractérisée par le fait qu'elle comporte:

—des moyens pour convertir les données d'images (260, 270) en une image (200) représentant la scène à partir de la perspective d'une position de référence, ces moyens de conversion utilisant lesdites informations d'assiette de l'imageur (103) et de position du satellite (101), ce satellite étant nominalement en orbite géosynchrone.

4. Système imageur ou station selon l'une des revendications précédentes, caractérisé(e) en outre en ce que ladite position de référence est l'orbite géosynchrone nominale du satellite (101).

5. Système imageur ou station selon l'une des revendications précédentes, caractérisé(e) en ce que le satellite (101) est un satellite météorologique.

6. Procédé pour produire une image idéalisée d'une scène, caractérisé en ce qu'il comprend les opérations consistant à:

—recueillir des données d'intensité d'éléments d'images (260, 270) à partir d'un satellite (101) équipé d'un imageur (103);

—déterminer l'emplacement du satellite et l'assiette de l'imageur,

caractérisé en outre par le fait qu'il comprend également les opérations consistant à:

—définir une position de référence à une longitude, une latitude et une altitude déterminées; et

—convertir les données d'intensité d'éléments d'images (260, 270) en une image de la scène (200) à partir de la perspective de la position de référence en utilisant lesdites informations d'emplacement et d'assiette.

7. Procédé selon la revendication 6, caractérisé en ce que les données fournies par l'imageur (103) sont sous la forme de lignes de balayage (260, 270), chaque ligne de balayage comprenant plusieurs éléments d'image (262, 263, 272, 273), chaque élément d'image ayant une intensité associée, et chaque ligne de balayage (260, 270) étant haute d'au moins un élément d'image et longue d'au moins plusieurs éléments d'image, ce procédé comprenant également l'opération consistant à:

—introduire les données d'intensité d'éléments d'images (260, 270) dans une mémoire tampon, de sorte que des données de lignes de balayage multiples soient mémorisées à un instant donné.

Fig. 1.

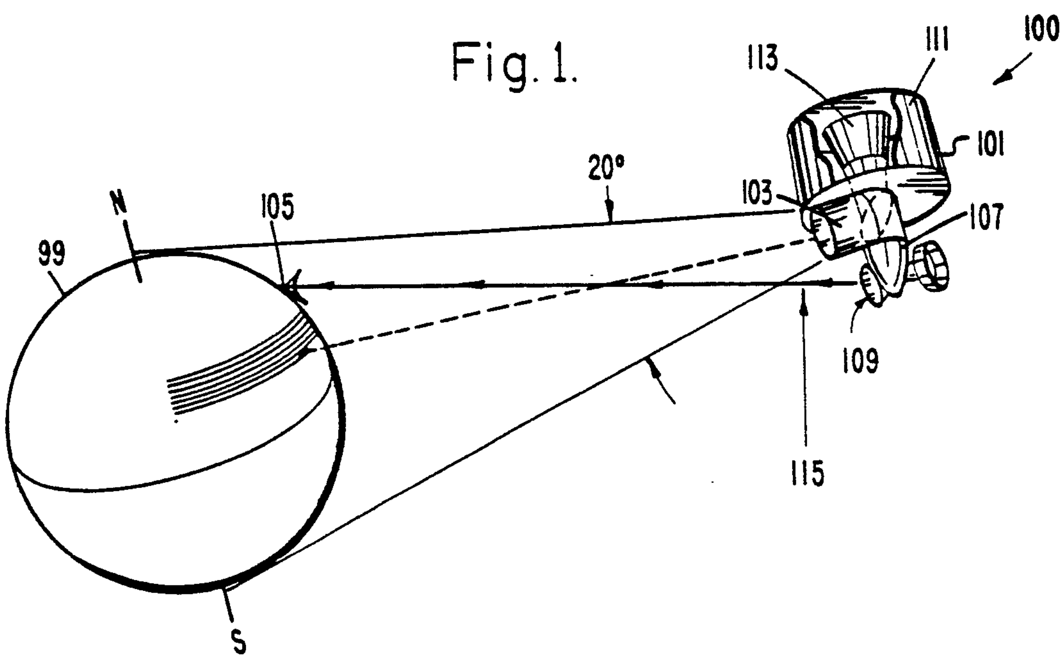
100
113
111
101
20°
103
107
N
105
99
109
115
S

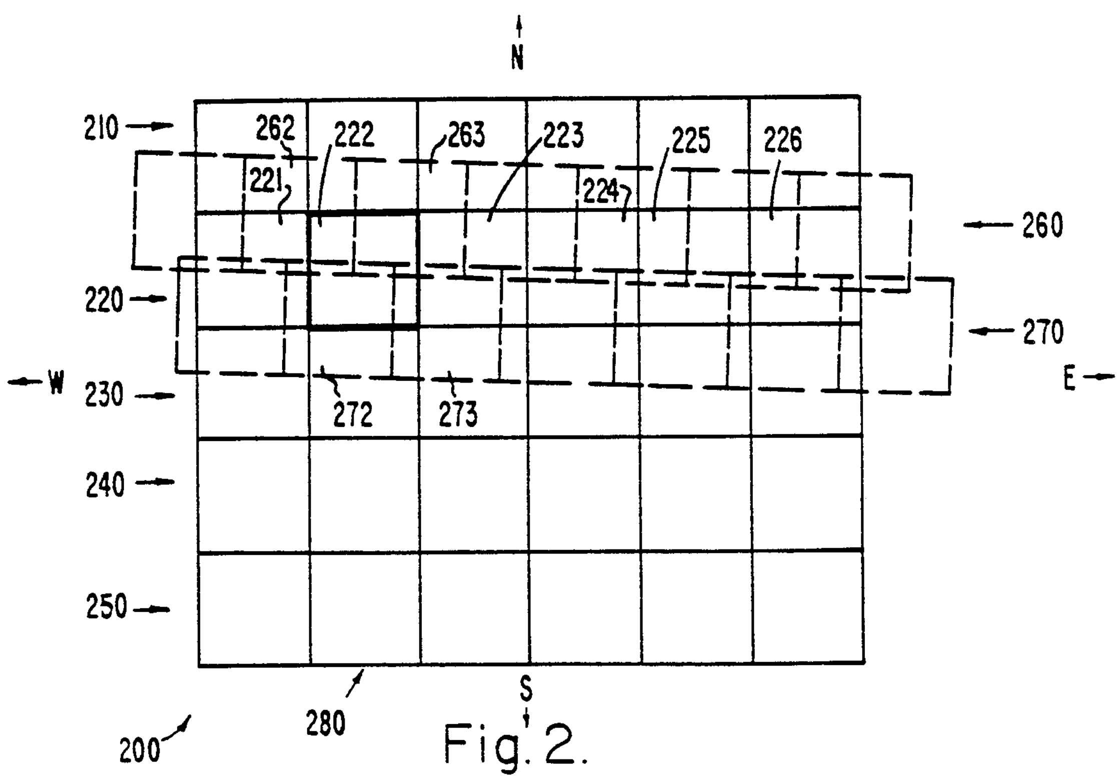
N
210
262
222
263
223
225
226
221
224
260
220
270
W
230
E
272
273
240
250
S
280
200

Fig. 2.